# EUROPEAN PATENT APPLICATION

(11) **EP 2 529 966 A1**
(43) Date of publication of application: **05.12.2012**
(21) Application number: 11380046.0
(22) Date of filing: 28.05.2011
(51) Int. Cl.: B60J 7/16, B62D 35/00

(54) **Variable and optimized aero-shape truck box**

(71) Applicant: De la Torre San José, Rafael, 28709 San Sebastian de los Reyes. Madrid (ES)
(72) Inventor: de la Torre San José, Rafael, 28709 San Sebastian de los Reyes Madrid (ES); Ribera Bodi, Jorge Manuel, 46290 Alcacer Valencia (ES)

(57) **Abstract**

A box for a rigid track, for a semi-trailer track, or for a trailer truck, or for a trailer truck, the box having rigid walls or canvas walls, the box being refrigerated or not, characterized in that the roof (1) can move vertically and at the same time can change its shape along the length of the box.

## Description

### Field on the Invention.

The invention is related with the aerodynamics optimisation of the transport means, mainly in truck boxes.

The improvement is achieved through truck boxes of variable geometry (mainly focused on the roof shape) that provide optimized aerodynamic drag depending on the volume of cargo in the box of the truck.

In the transportation business, a relevant number of operations are done with the truck running without cargo (empty box), or with a cargo that does not require the use of all the available volume of the box. In these cases, smaller boxes with respect to the traditional constant rectangular cross section along the length of the truck box (called square-shaped in this description) provide the same functionality with less aerodynamic drag. Aerodynamic drag reduction decreases the energy/fuel needed to move the truck.

Energy/fuel consumption in the road transport is a significant cost, and has a relevant impact on the environment due to exhaust gas emission of the engines.

During the last years significant efforts have been done to reduce the energy consumption of the trucks. These efforts have been focused mainly on the improvement of the engines efficiency, optimization of gear boxes and transmissions, and improvements in the aerodynamics of the front side of the lorry/trailer tractor.

One of the key drivers of truck fuel/energy consumption is the amount of energy required to overcome the truck aerodynamic drag. A large part of this aerodynamic drag is related with the shape of the truck box, and in particular, with the shape of the rear part of the box.

### Background of the Invention.

Square-shaped truck boxes are widely used in transportation industry, as more aerodynamic forms would reduce in principle the maximum cargo volume that can be transported in the truck, make more difficult cargo loading and downloading operations, and/or exceed the maximum dimensions allowed by transportation regulations and laws.

These square-shaped boxes cause turbulences in the rear part of the truck that generates unnecessary energy consumption, and as consequence increase the release of exhaust gases and pollution. In addition, turbulence in the rear part of the truck reduces visibility in rain conditions, and increases the risk of accident/incident for the other road users, mainly light vehicles as motorcycles and cyclists.

On the other hand, it is well known that a streamlined shape improves the penetration in the air and therefore reduces the energy required to move the vehicle. The use of more aerodynamic truck boxes is constrained by the requirement of having maximum volumetric capacity within the allowed dimensions, and at the same time it is also constrained by the need of simple loading and unloading operations.

On the other hand, a relevant number of operations are done with the truck running without cargo (empty box), or with a cargo that does not require the use of all the available volume of the box.

A number of devices already exist, with the aim of reducing the parasite drag at the rear part of the truck, trying to increase therefore the aerodynamic efficiency.

These devices are mainly ailerons, aerodynamic deflectors, vortex generators, and additional parts at the back side or near the back of the truck box.

In this sense, the attempts to reduce resistance at the rear part of the truck boxes can be seen on inventions as:
a.- Rear ailerons / deflectors at the back of the truck box as:
   ES2285889. "Sistema para reducir el consumo de combustible en vehículos".
   ES2345354T3. Translation of the European application: 06725796 .4 "Sistema para reducir el consumo de combustible en vehículos". US2010225143. "Apparatus for reducing drag on vehicles with planar rear surfaces".
   US2008309121. "System for the reduction of aerodynamic drag on vehicles". CA2521840. "Aerodynamic device for pickup trucks".
   These inventions are based on modifying the air flow at the end of the box, or to inject air at the rear part to reduce the drag. The turbulence reduction that these systems provide is very limited, therefore the energy/fuel savings they achieve are small. This is the reason why the above mentioned systems have not been widely used.
b.- Fixed or movable additional structures at the rear base of the box to reduce drag:
   ES2318204. Translation of European application: 03813823 .6 "Estructura desplegable de carenado de vehículo".
   CA2723882. "Rear-mounted aerodynamic structure for track cargo bodies". US2010231001. "Inflatable shaping system reducing the aerodynamic drag upon the rear of a vehicle".
   US2008116716. "Air foil".
   US6409252. "Truck trailer drag reducer".
   CA2358484. "Truck trailer drag reducer".
   US2002030384. "Apparatus to reduce base drag behind bluff bodies".
   US5823610. "Drag reducing apparatus for a vehicle".
   US5348366. "Drag reducing device for land vehicles".
   These inventions are based on the installation of additional elements at the rear part of the box to reduce drag.
   The main disadvantages of these systems are: the auxiliary structures installed at the rear part of the truck either exceed the maximum dimensions allowed by transport regulations or reduce the useful length of the box. In addition, in most of the cases, they complicate the access to the box and/or the loading and unloading operations. These strong drawbacks have prevented the practical deployment of these devices.
c.- Ideas proposing to reduce the rear area through the movement of the lateral walls of the box.
   US4508380. "Truck afterbody drag reducing device".
   This mentioned invention proposes aerodynamic improvement through the displacement of the lateral walls of the box.
   The practical implementation of this invention is seriously constrained due to: reduction of the useful area of the box in small volume configuration. It complicates the structure of the roof and its connection to the floor of the box, and it complicates radically the design and utilisation of the rear door of the box.
d.- Additionally, several solutions propose a drag reduction by means of the reduction of the front area of the truck. This is done by means of the vertical displacement of the roof, without modifying the roof geometry. Examples of these solution could be seen on the following references:
   W02010112467. "System for reducing the air resistance of a truck".
   DE8810497. "No title available"
   GB2241205. "Vehicle having height adjustable cover".
   GB2360494. "Trailer having adjustable height roof'.
   US7261354. "Retractable and extensible trailer with folding ramp".
   EP1234715. "Platform for a truck semitrailer".
   GB2166392. "Vehicle body with elevatable roof".
   GB2211795. "Vehicle with liftable roofs".
   EP0132103. "Curtain sided van bodies".
   US4392682. "Expansible and retractable vehicle body".
   ES2062904. "Fold-down cover for vehicle transportation box bodies"
   GB2265578. "A freight vehicle with a lifting roof'.

As it has been mentioned, all the above solutions propose a drag reduction by means of the reduction of the front area of the truck. This is done via the vertical displacement of the roof, but without modifying the roof geometry. As a result, they obtain truck boxes with smaller height but still maintaining the traditional square shape.

The main advantage of the present invention respect to the previously mentioned is that the present one provides a better aerodynamic optimization. The proposed truck box provides an optimized shape compared with the squared-shape. The proposed truck box has a variable geometry with a cross section that decreases as we move to the rear part of the truck. Thus, a better aerodynamic optimization is obtained.

### Summary of the Invention.

This invention resolves the need for a better aerodynamic in the truck box without penalising the current square-shaped boxes cargo capacity.

The present invention provides an aerodynamically optimized truck box for a large number of transport operations without jeopardising the highest volumetric capacity that traditional box provides, whenever this maximum capacity is required, and without adding additional complexity to the loading and unloading operations. All of the above is achieved within the constraints of the current transport regulation, mainly maximum allowed dimension.

The invention consists on a truck box in which the height and shape of the box can be changed along the length of the box. This gets a more optimal shape than traditional square-shaped from the aerodynamic point of view. The shape optimization reduces the turbulences at the rear part of the truck and as a result reduces the aerodynamic drag.

In case bigger cargo volume is needed, or to facilitate loading and unloading operations, the roof is mobile. Through assisted mechanisms, it is possible to enlarge the volume of the box up to the traditional squared- shape box. The variable geometry of the lateral walls of the box is achieved through the incorporation of elastic or collapsible coverings, bellows, or flexible panels, or any other method within the current state of the art. Thus, the box in the enlarged volume configuration is closed and watertight if needed.

As the height of the box varies, the rear part of the box, where the back door traditionally lies, varies also its height. The rear door design shall accommodate, therefore, this circumstance. There are multiple alternatives for the rear door within the current state-of-the-art such as: sliding door, book type telescopic door, book type door plus upper hatch, book type door plus canvas or fabric, book type door plus sliding door, etc.

For movements without cargo, or in which the load does not require the maximum available volume, the box would circulate in optimised configuration. In this way the energy/fuel consumption is improved, emissions are reduced, and turbulence is also reduced with the consequent improvement of road safety.

The invention achieves an improvement in the energy consumption, reduction of contaminant emissions, and improvement of road safety without reducing the transportation capability with respect to current truck boxes.

### Detailed description of a preferential embodiment.

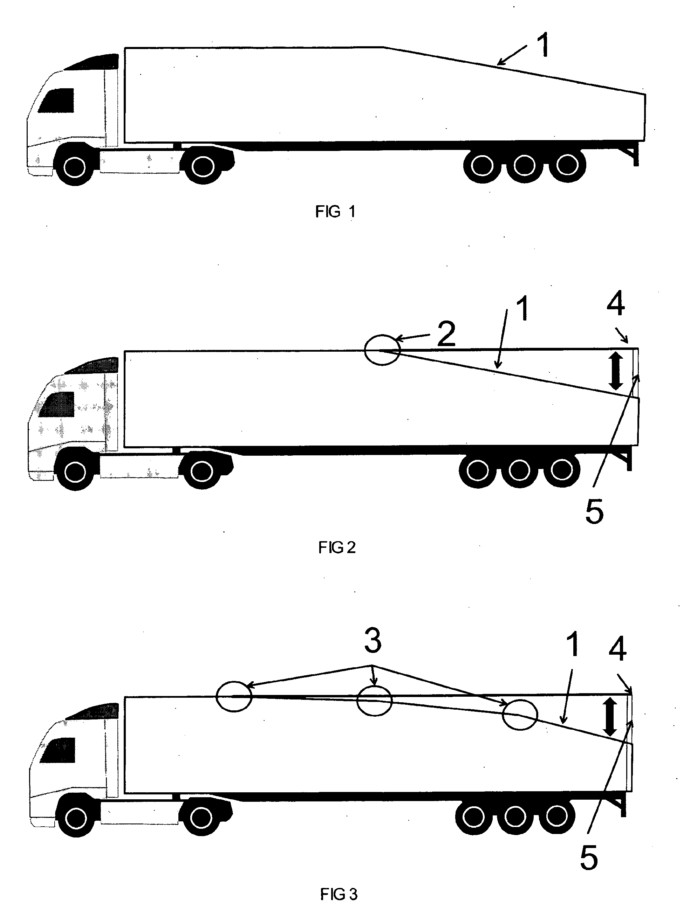

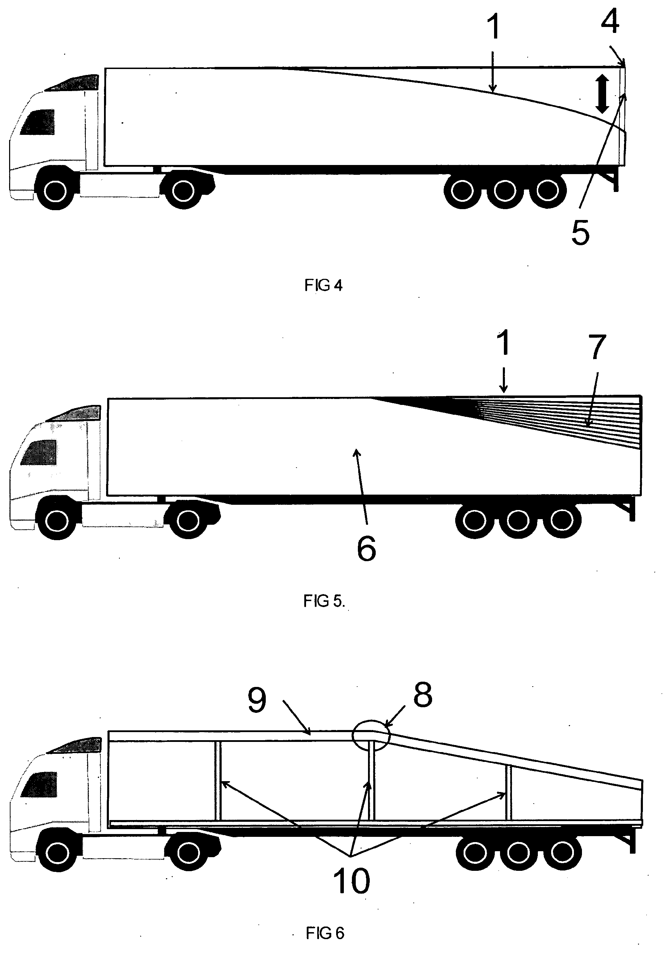

Figure 1 shows a truck box in optimized configuration. It shows a height reduction of the roof 1 as we get closer to the back of the box to make it more aerodynamically efficient. The shape of the variable and mobile roof can be straight as shown in Figure 2 (roof 1 articulated at one point only 2), polygonal as indicated in figure 3 (articulated roof 1 in several points 3), or curved as indicated in figure 4 (flexible roof 1 or with multiple hinges) to optimize the air flow around the truck.

As figures 2, 3 and 4 indicate, to get bigger cargo volume if it is required, and to facilitate the loading and unloading operations of the truck, the roof 1 is attached to the rear doorframe 4, which is of variable height, through the extension/retraction of the two vertical sides 5 of the doorframe. The movement of the vertical sides can be done manually, pneumatically, hydraulically, electrically, or any other. The control of these actuators/devices can be done from the truck box itself, or from the truck cockpit, both manual or automatically /semi-automatically.

The aforementioned extension/retraction varies the length of the lateral parts 5 of the doorframe 4 and thus the roof of the box adopts different geometries.

Figure 5 shows the box of the truck in its maximum load volume configuration. The lateral panels of the box 6 can be attached to the mobile roof 1 by means of elastic coatings, folding coatings, bellows, removable panels, expandable panels, or others, so that the space 7 between the fixed lateral panel 6 and the configurable roof 1 is covered maintaining a closed and watertight box.

The previous pictures refer to a truck box with rigid walls, but the invention also applies to boxes with canvas/fabric lateral walls.

The concept is similar for boxes with canvas walls. Figure 6 shows a truck box with canvas walls (the canvas have been removed to facilitate interpretation). In this case the articulation(s) 8 are located in the two upper lateral beams 9 which support the roof and serve as a guide to the walls of canvas. The lateral vertical rods 10 should be adjustable in length (i.e. telescopic) where it is required that beams 9 moves vertically.

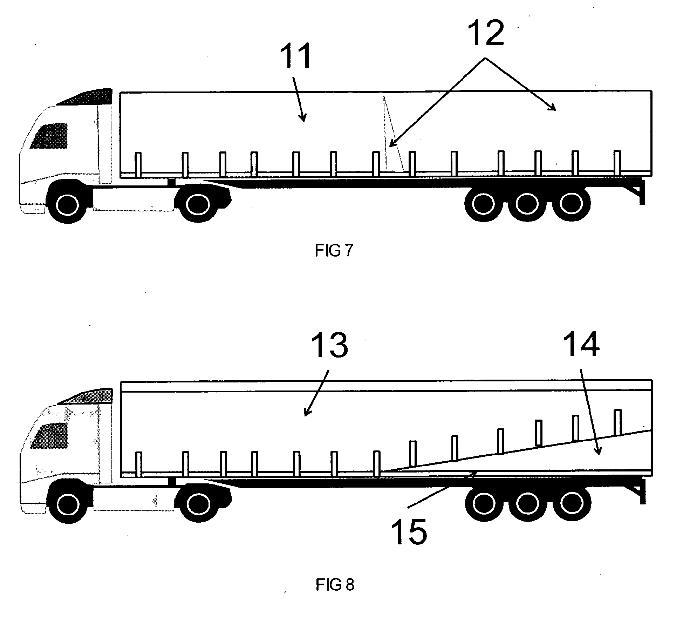

For trucks with lateral canvas, the lateral surface that needs to be covered with the canvas depends on the position of the roof of the box. For this type of configurations it is proposed to keep the canvas joined in the upper side as it is done usually, and to adjust the canvas out of this area. There are multiple solutions such as the use of elastic areas in the canvas, areas of the canvas that could be folded, removable and/or articulated lateral panels, etc. To illustrate the above, figure 7 presents a canvas 11 at maximum volume configuration with elastic areas 12. Figure 8 presents a canvas 13 without elastic elements but with lateral panels in the box 14 in order to close the gap that the canvas does not cover. These panels could be removable or laterally foldable through a hinged joint 15 at the base of the panel to facilitate the loading and unloading operations of the truck.

As mentioned above, as the height of the box varies, the rear doorframe where the rear door is located varies its height. Due to that, the rear door must be adapted to this circumstance. There are a number of possible alternatives for the rear door design, covered by the current state of the art. Here are some alternatives just to illustrate the industrial viability.

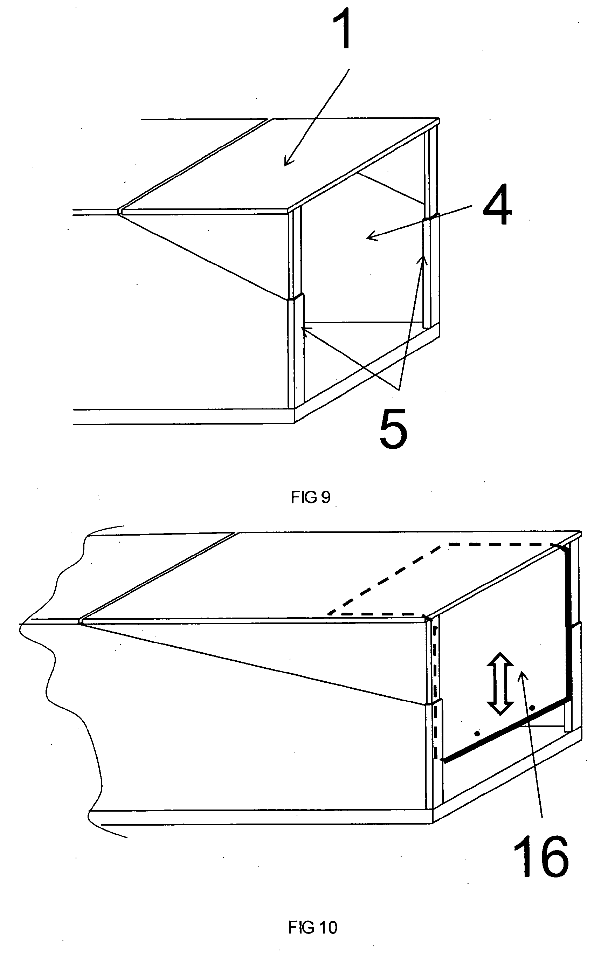

Figure 9 shows the rear doorframe 4, the two adaptable vertical columns/supports 5, and the configurable roof 1.

The simplest option is to cover the doorframe with a canvas that could be elastic, foldable or retractable banner on the roof 1; and fixed to the lateral columns 5 and to the floor of the box by means of any fixation system available today.

Another possible option is the one shown in figure 10, up-sliding door 16 that allows an easy opening and closing as well as the different positions and configurations of the box.

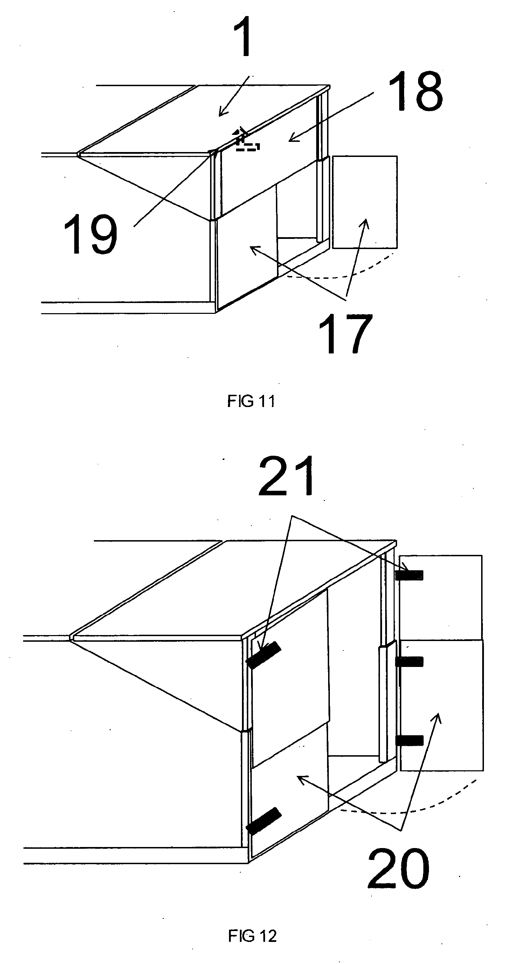

Figure 11 shows an option with "book type" doors 17 in the rear-lower part of the box that is not of variable geometry. To cover the remaining gap 18 that occurs when the roof 1 moves, canvas mentioned before can be used. Also a door hinged 19 in the joint with the roof 1 that allows you to break down towards the interior of the box to get in touch with the configurable 1 roof, or and sliding door upward as the one described in Figure 10.

Finally, figure 12 shows a solution with telescopic doors. The two doors 20 are designed in several parts, and the upper hinges 21 are attached to the movable part of the box. Thus the length of the door fits in every moment with the height of the box.

The selection of a door concept will depend on the preferences of the operator of the truck.

The above description of the invention has been done assuming configuration of minimum box volume as starting point. The concept assuming maximum volume configuration as starting point is exactly the same as the one previously described and it is also covered by this invention.

Finally it is necessary to note that all described in this section of "Detailed description of to preferential embodiment" is merely illustrative and only as an example, and it is no restrictive of the concept of this invention.

## Claims

1. A box for a rigid truck, box for a semi-trailer truck, or box for a trailer truck, and with rigid walls or canvases walls, refrigerator or not, characterized because the roof can move vertically and at the same time can change its shape along the length of the box of the truck. This characteristic provides a variable geometry that could vary from a maximum cargo volume configuration as constant rectangular cross section along the length of the truck box, to any other of constant or variable cross section varying linearly or not along the length of the truck box, to optimize in this way the aerodynamic drag of the truck making a box shape more aerodynamic.

2. A truck box according to claim 1 characterized because the roof can move and change in form by means of mechanical, hydraulic, pneumatic, electric, or other system, and can be operated from the box itself or from the cab of the truck (cockpit) in manual, semiautomatic or automatic mode.

3. A truck box according to claim 1 characterized because its panels or lateral canvas can vary its shape to adapt to the variable shape of the roof and provide a closed box.

4. A truck box according to claim 1 characterized because its walls or lateral canvas can be equipped with flexible or collapsible elements to adapt to the variable shape of the roof and provide a closed box.

5. A truck box according to claim 1 characterized because can install at the rear part of the box closing elements such as canvas, removable or folding panels, or doors of variable geometry to adapt the door to the different geometries of the back of the box and provide a closed box.

6. A truck box according to claim 1 characterized because the lateral walls remain fixed, and is the roof which moves and changes shape between this lateral fixed walls.

7. A truck box according to claim 1 characterized because the box can reduce its size to make be more aerodynamic, departing from a full cargo configuration.

8. A truck box according to claim 1 characterized because the box can increase its size to increase the available volume for cargo, departing from an aerodynamic favourable configuration.

9. A box according to claim 1 characterized because can be applied to any other vehicle of transportation such as vans, buses or cars.

10. A box according to claim 1 characterized because can be applied to the cargo containers used in ship and train transportation, that will be used later on in road transportation.
